# FASCICULE DE BREVET EUROPEEN

(11) **EP 0 946 681 B1**
(45) Date de publication et mention de la délivrance du brevet: **02.10.2002**
(21) Numéro de dépôt: 97935604.5
(22) Date de dépôt: 23.07.1997
(51) Int. Cl.: C10L 1/18, C10L 1/24, C10L 1/14, C10L 10/02, C07F 15/02, C07F 15/04, C07F 15/06, C07F 13/00

(54) **COMPOSITIONS ORGANOMETALLIQUES MIXTES, COMPRENANT AU MOINS TROIS METAUX, ET LEURS APPLICATIONS COMME ADDITIFS POUR COMBUSTIBLES OU CARBURANTS**
WENIGSTENS DREI METALLE ENTHALTENDE ORGANOMETALLISCHE MISCHZUSAMMENSETZUNGEN, UND IHRE VERWENDUNGEN ALS ZUSÄTZE FÜR BRENNSTOFFE UND MOTORTREIBSTOFFE
MIXED ORGANOMETALLIC COMPOSITIONS INCLUDING AT LEAST THREE METALS, AND USES THEREOF AS FUEL ADDITIVES

(30) Priorité: 29.07.1996 FR 9609517
(43) Date de publication de la demande: 06.10.1999
(73) Titulaire: TOTAL RAFFINAGE DISTRIBUTION S.A., 92800 Puteaux (FR); Gamlen Industries S.A., 78380 Bougival (FR)
(72) Inventeur: VAN DEN NESTE, Corinne, F-76620 Le Havre (FR); PEYROT, Jean, F-76600 Le Havre (FR); BRISSET, Guy, F-27950 Saint-Just (FR); BRIARD, Gérard, F-27200 Vernon (FR)
(74) Mandataire: Jolly, Jean-Pierre
(86) Numéro de dépôt international: FR9701369
(87) Numéro de publication internationale: WO98004655

(56) Documents cités:
- EP-A- 0 112 219
- EP-A- 0 426 978
- WO-A-87/00193
- WO-A-95/18198
- DE-A- 4 032 845
- FR-A- 1 325 217
- FR-A- 2 632 966
- GB-A- 2 091 291
- GB-A- 2 248 068
- DATABASE WPI Section Ch, Week 9317 Derwent Publications Ltd., London, GB; Class E19, AN 93-139731 XP002030019 & JP 05 076 762 A (SAKAI CHEM IND CO LTD) , 30 mars 1993

## Description

La présente invention concerne des compositions organométalliques mixtes, comprenant au moins trois métaux appartenant, respectivement, au groupe du manganèse ou du fer, au groupe des terres rares, ainsi qu'au groupe des alcalins ou alcalino-terreux. Elle concerne également les applications de ces compositions organométalliques comme additifs de combustion, pour des combustibles ou carburants liquides hydrocarbonés, tels que les fiouls ou les gazoles.

Il est déjà connu d'utiliser des sels complexes organométalliques o u organométalloïdiques d'acides organiques, comme additifs de combustion des combustibles liquides hydrocarbonés, pour, par exemple, faciliter et améliorer la combustion de ces combustibles. De tels additifs sont, par exemple, constitués d'un sel complexe obtenu à partir d'un acide organique (acides gras ayant plus de 7 atomes de carbone) et de fer (voir FR-A-2 172 797), ou de manganèse (voir FR-A- 2 486 083), ou de terres rares, notamment le cérium (voir FR-A- 2 359 192). Les Demanderesses ont également proposé des additifs de combustion mixtes comprenant du fer et du cérium (voir EP-A-112 219).

Le mécanisme d'action de ces additifs sur la combustion, en particulier, d'un fioul semble relativement bien connu: les oxydes métalliques contenus dans l'additif s'adsorberaient sur les asphaltènes toujours présents dans un fioul et, ces oxydes métalliques ayant un effet catalytique sur la combustion de ces asphaltènes, ils réduiraient ainsi les quantités d'imbrûlés solides émis pendant la combustion.

L'utilisation de composés à base de terres rares est cependant, du fait même de la rareté de ces composés, d'un coût élevé. Aussi, pour réduire ce coût, de nombreux composés organométalliques de substitution ont également été recherchés et testés par les Demanderesses, sans grand succès.

Il a toutefois été trouvé que, de façon tout à fait surprenante, non seulement la teneur en terres rares peut être considérablement diminuée par l'adjonction d'un troisième métal de type alcalin et ou alcalino-terreux, mais en plus, la qualité de ces additifs est considérablement améliorée.

Les Demanderesses ont ainsi établi que, de manière surprenante, l'adjonction d'un troisième élément à côté du fer et du cérium permet, non seulement d'améliorer encore les qualités de combustion en ce qui concerne l'environnement, notamment en milieu urbain - ces qualités de combustion étant soumises à des réglementations de plus en plus sévères - mais également de diminuer le coût de l'additif.

La présente invention vise donc à proposer des compositions organométalliques mixtes contenant au moins trois métaux, dont l'efficacité en tant qu'adjuvant de combustion est au moins équivalente aux mélanges de sels de fer et de terres rares à teneur globale en métaux identique, et dont le coût est, du fait de la réduction de la teneur en terres rares, sensiblement réduit par rapport à ces mêmes sels.

La présente invention a donc pour objet des compositions organométalliques mixtes, caractérisées en ce qu'elles comprennent des sels d'acides organiques d'au moins trois métaux M1, M2 et M3,
- le premier métal, M1, étant constitué d'au moins un métal appartenant soit au groupe du fer, soit au groupe du manganèse, de préférence un métal choisi parmi le fer, le manganèse, le cobalt ou le nickel,
- le second métal, M2, étant constitué d'au moins un métal appartenant au groupe des terres rares, de préférence un métal choisi parmi le cérium, le lanthane, le néodyme ou le praséodyme,
- le troisième métal, M3, étant choisi dans le groupe des métaux alcalins ou des alcalino-terreux, de préférence, un métal choisi parmi le baryum, le strontium, le calcium ou le lithium,
et en ce que le rapport R des teneurs en masse des métaux M3/M2, est supérieur à 0,15, de préférence supérieur à 1,5.

En effet, il s'est avéré que l'ajout dans la composition d'un troisième élément, appartenant au groupe des métaux alcalins ou alcalino-terreux, permet de réduire de façon inattendue, d'une part, la teneur en terre rare de l'additif, et d'autre part, le niveau des quantités d'imbrûlés solides produits pendant la combustion d'un fioul comportant comme additif la dite composition. De plus, à teneur globale en métaux identique dans la composition, l'utilisation du calcium dans cette composition permet de diminuer d'autant la quantité de terre rare nécessaire et donc de diminuer le coût de l'additif.

Dans la définition de l'objet de l'invention, et pour la suite de la présente description, comme métal M1 choisi dans les groupes du fer ou du manganèse, le fer est l'élément préféré, en raison de son coût peu élevé. Il peut être utilisé seul ou en mélange avec le manganèse, le cobalt ou le nickel.

De la même façon, le métal M2 du groupe des terres rares est, de préférence, le cérium. Il peut être utilisé seul ou en mélange avec le lanthane, le néodyme ou le praséodyme.

L'élément préféré, comme métal M3 appartenant au groupe des alcalins ou alcalino-terreux, est le calcium, qui peut être utilisé seul ou en mélange avec le lithium, le strontium ou le baryum.

Les dérivés organométalliques du groupe du fer ou du manganèse et du groupe des terres rares peuvent être préparés suivant les méthodes décrites dans l'art antérieur, en particulier dans le brevet européen EP-B-112 219, déposé au nom des Demanderesses, permettant ainsi d'obtenir des solutions très fortement concentrées en métal et dépassant très largement les valeurs stoechiométriques normales.

La solution contenant le calcium peut être obtenue à partir d'un sel hydro-soluble, d'un oxyde ou d'un hydroxyde et d'un acide gras comportant, de préférence, plus de 7 atomes de carbone. D'autres acides organiques peuvent également être utilisés comme, par exemple, les acides alcoyl-, aryl-, ou alcoylarylsulfoniques et les acides carboxyliques à chaîne alcoylaryle comportant, de préférence, plus de 8 atomes de carbone.

La composition finale peut ensuite être obtenue par mélange des solutions, en particulier de fer, de cérium et de calcium, dans un solvant organique, de préférence, du type aromatique, et dont la teneur en composés aromatiques est supérieure à 50% et de préférence supérieure à 80%. Le produit obtenu est stable et fluide à la température ambiante, ce qui permet une très grande facilité de mise en oeuvre.

Les compositions selon l'invention comprennent, de préférence, une teneur en métal M1 des groupes du fer ou du manganèse supérieure ou égale à 30% en poids, rapportée au poids total des métaux, et une teneur en terre rare M2 supérieure ou égale à 10% en poids. La teneur en métal M3 appartenant au groupe des alcalins ou alcalino-terreux est-directement liée à la teneur en terre rare M2 par le rapport R des teneurs en masse des métaux M3 et M2 qui doit être supérieur à 0,15 et, de préférence, supérieur à 1,5.

Ces compositions sont solubles dans les hydrocarbures et peuvent, par conséquent, être ajoutées en proportions adéquates dans les combustibles et carburants liquides hydrocarbonés tels que les fiouls résiduels lourds, légers ou domestiques, et les gazoles, de manière à ce que ces dits combustibles ou carburants contiennent entre 10 et 100 ppm de métaux ajoutés et, de préférence, entre 40 et 100 ppm.

L'utilisation d'un tel additif aux teneurs ci-dessus indiquées dans un combustible permet de réduire les émissions d'imbrûlés solides et donc de respecter les réglementations en vigueur. Elle autorise également un fonctionnement de l'installation de chauffage avec un plus faible excès d'air que dans les conditions classiques; l'additif trimétallique permet ainsi de réduire indirectement les émissions des oxydes d'azote.

Le rendement des installations de combustion est également amélioré par:
- un fonctionnement à plus faible excès d'air,
- une réduction des pertes aux fumées par imbrûlés solides,
- un moindre encrassement des surfaces d'échange.

Enfin, les coûts d'exploitation seront minimisés par un espacement plus grand des opérations de ramonage, nettoyage et notamment, de mise en décharge des suies, captées par exemple, sur les dépoussiéreurs.

L'exemple suivant est destiné à illustrer l'invention de façon non limitative.

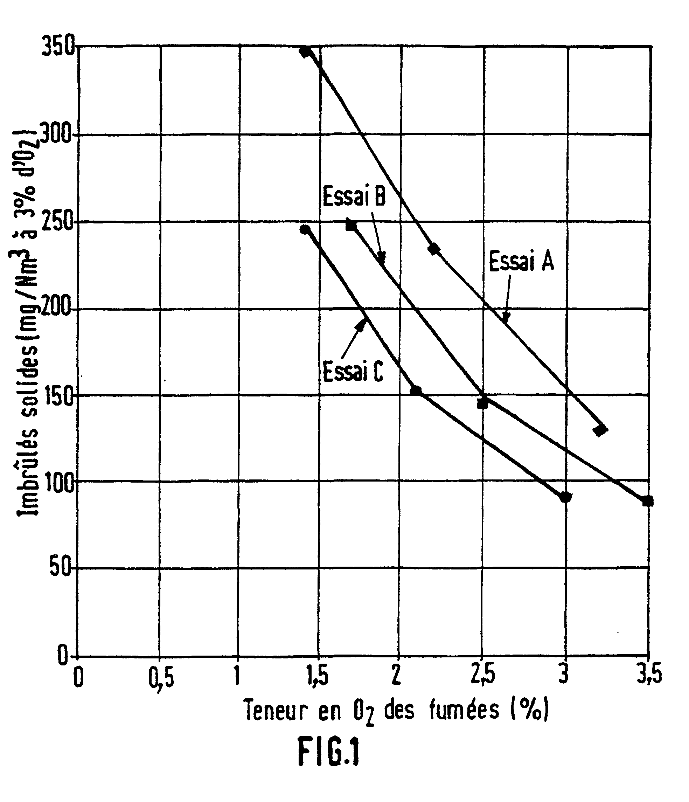

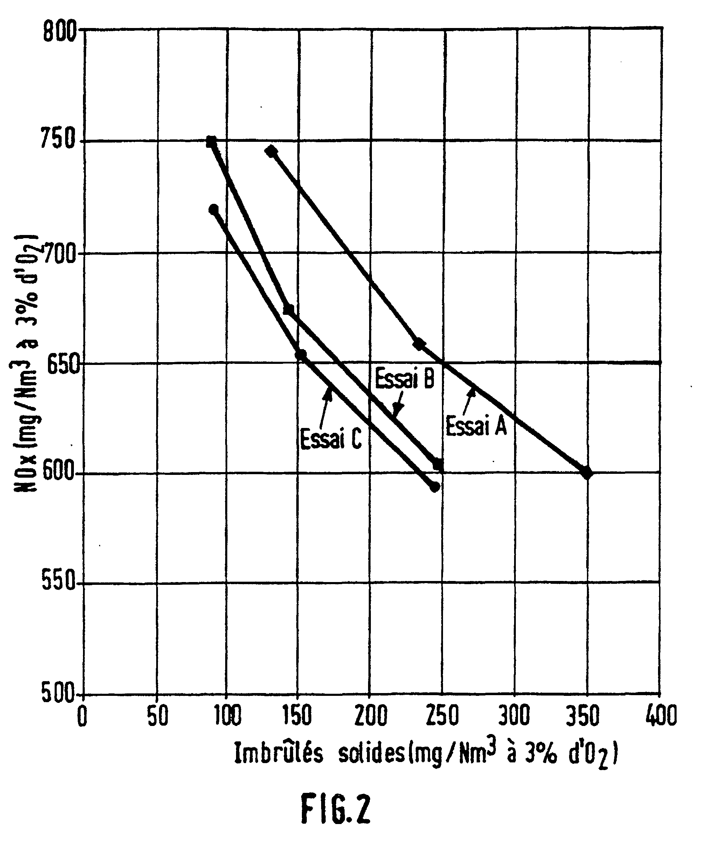

Dans cet exemple, on se référera aux dessins annexés, sur lesquels les figures 1 et 2 sont des graphiques, illustrant des résultats d'essais effectués dans des conditions qui seront décrites dans cet exemple.

### Exemple

On alimente successivement une chaudière avec le même combustible liquide, sans additif pour le premier essai (essai A), puis additionné d'une composition contenant au moins deux métaux (fer et cérium) telle que décrite dans le brevet EP-B-112 219 déposé aux noms des Demanderesses (essai B), et enfin contenant l'additif trimétallique objet de la présente invention (essai C).

L'injection des additifs dans le combustible liquide est effectuée par l'intermédiaire d'une pompe doseuse au niveau du réchauffeur. Les quantités d'additifs introduites dans le combustible sont telles que la teneur totale en métaux apportés par lesdits additifs dans le combustible est de 40 ppm (exprimés par rapport au poids total du combustible et de l'additif).

Chacun des essais est réalisé à trois niveaux d'excès d'air variant de environ 3% à environ 1,5% d'oxygène dans les fumées.

La chaudière est du type à tubes de fumées-eau chaude, avec les caractéristiques suivantes:
- puissance nominale: 7000 th/h,
- diamètre du foyer: 1200 mm,
- longueur du foyer: 4920 mm,
- brûleur: débit de fuel nominal de 550 Kg/h avec un angle de diffusion de 70°C et une atomisation réalisée par de l'air comprimé à 6.10⁵ Pa (6 bars).

Le combustible liquide utilisé pour chacun des essais est un fioul lourd, dont les principales caractéristiques physico-chimiques sont rassemblées dans le Tableau 1. Dans ce tableau, tous les pourcentages sont exprimés en masse.

**Tableau 1.**

| Caractéristiques du fioul | | | |
|---|---|---|---|
| **CARACTERISTIQUES** | **NORMES/ METHODES** | **UNITES** | **RESULTATS** |
| **Masse Volumique à 15°C** | NF T 60-172 ASTM D4052 | kg/m³ | 1018,4 |
| **Viscosité à 50°C** | NF T 60-100 ASTM D445 | mm²/s | 527,88 |
| **Viscosité à 100°C** | NF T 60-100 ASTM D445 | mm²/s | 39,09 |
| **Carbone** | | % | 84,45 |
| **Azote Kjeldahl** | ASTM D3228 | % | 0,44 |
| **Hydrogène** | | % | 9,81 |
| **Soufre** | | % | 2,72 |
| **PCS mesuré** | | MJ/kg | 41,84 |
| **PCI calculé** | | MJ/kg | 39,76 |
| **Asphaltènes** | NF T 60-115 IP 143 | % | 7,6 |
| **Résidu Conradson** | ASTM D4530 | % | 14,4 |
| **Cendres** | NF M 07-045 EN ISO 6245 | % | 0,039 |
| **Insolubles** | NF M 07-063 | ppm | 250 |
| **Métaux totaux** | Emission Atomique | ppm | 240 |

Les conditions opératoires sont sensiblement identiques pour les trois essais et sont regroupées dans le Tableau 2.

**Tableau 2.**

| Conditions opératoires | | | | | | | | | |
|---|---|---|---|---|---|---|---|---|---|
| **CARACTERISTIQUES** | **Essai A** (sans additif) | | | **Essai B** (+ additif bimétallique) | | | **Essai C** (+ additif trimétallique) | | |
| Concentration totale en métaux apportés par les additifs (en ppm par rapport au combustible) | 0 | | | 40 | | | 40 | | |
| | A1 | A2 | A3 | B1 | B2 | B3 | C1 | C2 | C3 |
| Oxygène total (%) | 3,1 | 2,2 | 1,4 | 3,4 | 2,4 | 1,7 | 3,0 | 2,1 | 1,4 |
| Débit fioul (kg/h) | 516 | 515 | 514 | 504 | 516 | 510 | 515 | 510 | 512 |
| Pression fioul (10⁵ Pa) | 8,0 | 7,9 | 8,0 | 7,8 | 7,8 | 7,8 | 7,8 | 7,7 | 7,9 |
| Temp. fioul (°C) | 74 | 74 | 75 | 75 | 74 | 75 | 75 | 75 | 75 |
| Visco. fioul (mm²/s) | 125 | 120 | 120 | 120 | 125 | 120 | 120 | 120 | 120 |
| Pression air pulv. (10⁵ Pa) | 6,2 | 6,2 | 6,0 | 6,0 | 5,9 | 6,1 | 6,1 | 6 | 6,1 |
| Temp.air pulv. (°C) | 23 | 23 | 23 | 25 | 25 | 25 | 23 | 24 | 24 |

On réalise, pour chaque essai et pour chacune des trois valeurs d'excès d'air de combustion, un échantillonnage isocinétique et une détermination pondérale des imbrûlés solides produits pendant la combustion, ainsi que des analyses des gaz de combustion. Pour les besoins des mesures, les imbrûlés sont prélevés à la cheminée dans une zone d'écoulement stabilisée, à une hauteur d'environ 5 mètres.

Ces mesures ou analyses sont effectuées au moins une heure après le début de l'injection de chacun des deux additifs, la chaudière étant alimentée au moins une heure avec le combustible sans additif entre chacun des essais.

Les résultats des mesures et analyses sont regroupés dans le Tableau 3.

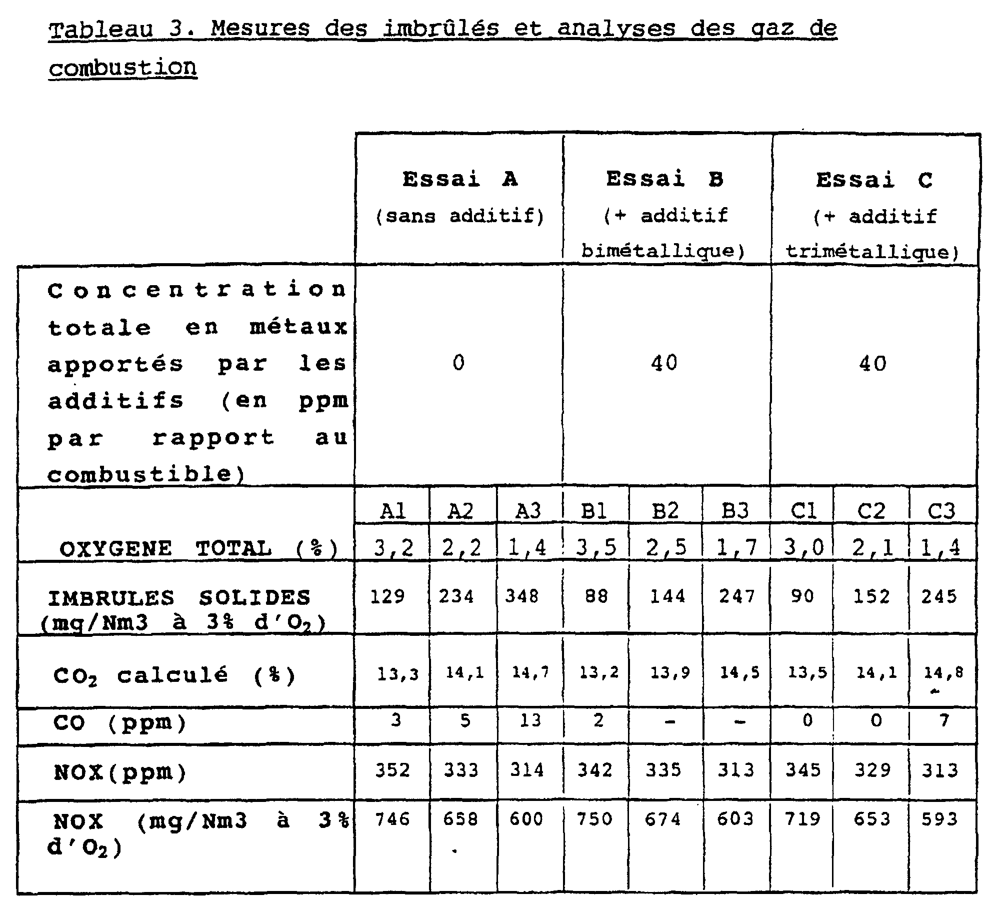

La figure 1 des dessins annexés représente d'une manière graphique les variations des quantités d'imbrûlés solides (mg/Nm³ à 3% d'O₂) produits lors de chacun des trois essais, en fonction de la teneur en oxygène de combustion (%).

De la même manière, la figure 2 est une représentation graphique des variations des oxydes d'azote (mg/Nm³ à 3% d'O₂) mesurés, en fonction des imbrûlés produits pendant la combustion.

On voit, sur la figure 1, qu'à teneur en oxygène constante, la présence d'un additif dans le fioul de combustion permet de réduire sensiblement les quantités d'imbrûlés produits pendant ladite combustion.

L'additif trimétallique (essai C) objet de la présente invention, présent dans un fioul à une teneur de 40 ppm, permet :
- de réduire d'environ 30% à environ 35% la quantité d'imbrûlés solides produits par rapport à un même fioul sans additif (essai A), quand la teneur en oxygène des fumées varie de sensiblement 1,5% à 3,0%. Cette réduction d'imbrûlés est d'environ 20% pour l'additif bimétallique (essai B).
- d'améliorer d'environ 50% les performances obtenues avec l'additif bimétallique dont la composition est décrite dans EP-B-112 219.

De plus, on voit sur la figure 1 que pour une même cible de quantité d'imbrûlés solides, la présence de l'additif trimétallique permet un fonctionnement de la chaudière avec un plus faible excès d'air.

La quantité d'oxydes d'azote produits lors d'une combustion étant proportionnelle à l'excès d'air de la dite combustion, l'additif trimétallique, objet de la présente invention, permet de réduire indirectement les quantités d'oxydes d'azote produits lors de la combustion d'un fioul additionné de la composition objet de la présente invention.

C'est ce qui ressort de la figure 2, qui montre que, pour une même teneur en imbrûlés solides, l'utilisation de l'additif trimétallique (essai C) permet de réduire les émissions des oxydes d'azote d'environ 10%, par rapport à la combustion d'un même fioul sans additif.

De plus, l'additif trimétallique permet de limiter les émissions d'imbrûlés à des valeurs très faibles (entre 50 et 100 mg/Nm³ à 3% d'O₂), sans le recours coûteux et contraignant à des dépoussiéreurs compliqués.

L'emploi de l'additif trimétallique, objet de la présente invention permet d'atteindre un meilleur compromis entre les émissions des imbrûlés solides et celles des oxydes d'azote.

Le rendement des installations de combustion peut donc ainsi être amélioré par :
- diminution des excès d'air, donc des oxydes d'azotes produits pendant ladite combustion,
- diminution des pertes aux fumées par réduction des imbrûlés solides,
- réduction de l'encrassement des surfaces d'échange.

De plus, le coût d'exploitation pourra également être réduit par une baisse du nombre des opérations de ramonage, nettoyage et mise en décharge des suies captées par exemple aux dépoussiéreurs.

## Revendications

1. Compositions organométalliques mixtes, **caractérisées en ce qu'**elles comprennent des sels d'acides organiques d'au moins trois métaux M1, M2 et M3,
- le premier métal, M1, étant constitué d'au moins un métal appartenant soit au groupe du fer, soit au groupe du manganèse, et de préférence un métal choisi parmi le fer, le manganèse, le cobalt ou le nickel,
- le second métal, M2, étant constitué d'au moins un métal appartenant au groupe des terres rares, de préférence un métal choisi parmi le cérium, le lanthane, le néodyme ou le praséodyme,
- le troisième métal, M3, étant choisi dans le groupe des alcalins ou des alcalino-terreux, de préférence un métal choisi parmi le baryum, le strontium, le calcium ou le lithium,
et **en ce que** le rapport R des teneurs en masse des métaux M3/M2, est supérieur à 0,15, de préférence supérieur à 1,5.

2. Compositions selon la revendication 1, **caractérisées en ce que** l'élément M1 est le fer.

3. Compositions selon l'une des revendications 1 ou 2, **caractérisées en ce que** l'élément M2 est le cérium.

4. Compositions selon l'une des revendications 1 à 3, **caractérisées en ce que** l'élément M3 est le calcium.

5. Compositions selon l'une des revendications 1 à 4, **caractérisées en ce qu'**elles comprennent, par rapport au poids total des métaux, au moins 30% en poids du métal M1 et au moins 10% en poids du métal M2.

6. Compositions selon l'une des revendications 1 à 5, **caractérisées en ce que** l'acide organique est choisi dans le groupe constitué par les acides gras ayant plus de 7 atomes de carbone.

7. Compositions selon la revendication 6, **caractérisées en ce que** les dits sels d'acides organiques sont des sels des acides alcoyl, aryl, ou alcoylaryl sulfoniques ou d'acides carboxyliques à chaîne alcoylaryle comportant plus de 8 atomes de carbone.

8. Compositions selon l'une des revendications 1 à 7, **caractérisées en ce que** lesdits sels d'acides organiques sont dilués dans un solvant organique, de préférence du type aromatique.

9. Compositions selon la revendication 8, **caractérisées en ce que** la teneur en molécules aromatiques du solvant organique, est supérieure à 50% en poids et, de préférence, supérieure à 80% en poids.

10. Application des compositions selon l'une des revendications 1 à 9, comme additifs pour combustibles ou carburants hydrocarbonés.

11. Application selon la revendication 10, **caractérisée en ce que** la composition est utilisée à une concentration totale en métaux ajoutés, dans le combustible ou le carburant hydrocarboné, supérieure à 10 ppm et, de préférence, supérieure à 40 ppm.

## Patentansprüche

1. Organometallische Mischzusammensetzungen, **dadurch gekennzeichnet, dass** sie die Salze von organischen Säuren von mindestens drei Metallen M1, M2 und M3 enthalten,
wobei das erste Metall, M1, mindestens ein entweder der Eisengruppe oder der Mangangruppe zugehöriges Metall, vorzugsweise ein Metall, ausgewählt aus Eisen, Mangan, Kobalt oder Nickel, darstellt,
wobei das zweite Metall, M2, mindestens ein der Gruppe der seltenen Erden zugehöriges Metall, vorzugsweise ein Metall, ausgewählt aus Cer, Lanthan, Neodym oder Praseodym, darstellt,
wobei das dritte Metall, M3, aus der Gruppe der Alkalien oder der Erdalkalien ausgewählt ist, vorzugsweise ein Metall, ausgewählt aus Barium, Strontium, Calcium oder Lithium;
und dass das Verhältnis zwischen den Massen der Metalle M3/M2 mehr als 0,15, vorzugsweise mehr als 1,5, beträgt.

2. Zusammensetzungen nach Anspruch 1, **dadurch gekennzeichnet, dass** das Element M1 Eisen darstellt.

3. Zusammensetzungen nach einem der Ansprüche 1 oder 2, **dadurch gekennzeichnet, dass** das Element M2 Cer darstellt.

4. Zusammensetzungen nach einem der Ansprüche 1 bis 3, **dadurch gekennzeichnet, dass** das Element M3 Calcium darstellt.

5. Zusammensetzungen nach einem der Ansprüche 1 bis 4, **dadurch gekennzeichnet, dass** sie, bezogen auf das Gesamtgewicht der Metalle, mindestens 30 Gew.-% des Metalls M1 und mindestens 10 Gew.-% des Metalls M2 enthalten.

6. Zusammensetzungen nach einem der Ansprüche 1 bis 5, **dadurch gekennzeichnet, dass** die organische Säure aus der Gruppe, bestehend aus Fettsäuren mit mehr als 7 Kohlenstoffatomen, ausgewählt ist.

7. Zusammensetzungen nach Anspruch 6, **dadurch gekennzeichnet, dass** die Salze der organischen Säuren Salze von Alkoyl-, Aryl- oder Alkoylarylsulfonsäuren oder Carbonsäuren mit einer Alkoylarylkette mit mehr als 8 Kohlenstoffatomen darstellen.

8. Zusammensetzungen nach einem der Ansprüche 1 bis 7, **dadurch gekennzeichnet, dass** die Salze der organischen Säuren mit einem organischen Lösungsmittel, vorzugsweise mit einem aromatischen Lösungsmittel, verdünnt sind.

9. Zusammensetzungen nach Anspruch 8, **dadurch gekennzeichnet, dass** der Gehalt an aromatischen Molekülen im organischen Lösungsmittel größer als 50 Gew.-%, vorzugsweise größer als 60 Gew.-%, ist.

10. Anwendung der Zusammensetzungen nach einem der Ansprüche 1 bis 9 als Zusätze für kohlenwasserstoffhaltige Brennstoffe oder Treibstoffe.

11. Anwendung nach Anspruch 10, **dadurch gekennzeichnet, dass** die Zusammensetzung in einer Konzentration von insgesamt zugesetzten Metallen im kohlenwasserstoffhaltigen Brennstoff oder Treibstoff mehr als 10 ppm, vorzugsweise mehr als 40 ppm, verwendet wird.

## Claims

1. Mixed organometallic compositions, **characterised in that** they comprise organic acid salts of at least three metals M1, M2 and M3,
- the first metal, M1, consisting of at least one metal belonging either to the iron group or to the manganese group, and preferably a metal selected from iron, manganese, cobalt or nickel,
- the second metal, M2, consisting of at least one metal belonging to the rare earth group, preferably a metal selected from cerium, lanthanum, neodymium or praseodymium,
- the third metal, M3, being selected from the group comprising alkali metals or alkaline-earth metals, preferably a metal selected from barium, strontium, calcium or lithium,
and **in that** the ratio R of the contents by weight of the metals M3/M2 is greater than 0.15, preferably greater than 1.5.

2. Compositions according to claim 1, **characterised in that** the element M1 is iron.

3. Compositions according to one of claims 1 or 2, **characterised in that** the element M2 is cerium.

4. Compositions according to one of claims 1 to 3, **characterised in that** the element M3 is calcium.

5. Compositions according to one of claims 1 to 4, **characterised in that** they comprise, relative to the total weight of the metals, at least 30% by weight of the metal M1 and at least 10% by weight of the metal M2.

6. Compositions according to one of claims 1 to 5, **characterised in that** the organic acid is selected from the group consisting of fatty acids with more than 7 carbon atoms.

7. Compositions according to claim 6, **characterised in that** said organic acid salts are salts of alkyl-, aryl-, or alkylarylsulfonic acids or carboxylic acids with an alkylaryl chain comprising more than 8 carbon atoms.

8. Compositions according to one of claims 1 to 7, **characterised in that** said organic acid salts are diluted in an organic solvent, preferably of the aromatic type.

9. Compositions according to claim 8, **characterised in that** the aromatic molecule content of the organic solvent is greater than 50% by weight and, preferably, greater than 80% by weight.

10. Application of the compositions according to one of claims 1 to 9 as additives for hydrocarbon fuels or motor fuels.

11. Application according to claim 10, **characterised in that** the composition is used at a total concentration of added metals, in the hydrocarbon fuel or motor fuel, of greater than 10 ppm and preferably greater than 40 ppm.
